# FASCICULE DE BREVET EUROPEEN

(11) **EP 0 835 769 B1**
(45) Date de publication et mention de la délivrance du brevet: **11.12.2002**
(21) Numéro de dépôt: 97116530.3
(22) Date de dépôt: 23.09.1997
(51) Int. Cl.: B60C 17/06

(54) **Dispositif de soutien de bande de roulement**
Stützvorrichtung für eine Reifenlauffläche
Supporting device for tyre tread

(30) Priorité: 08.10.1996 FR 9612346
(43) Date de publication de la demande: 15.04.1998
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Rivaton, Renaud, 63112 Blanzat (FR)
(74) Mandataire: Diernaz, Christian

(56) Documents cités:
- EP-A- 0 188 243
- EP-A- 0 635 384
- DE-A- 4 124 398
- GB-A- 2 084 088

## Description

L'invention concerne un dispositif de soutien de bande de roulement de pneumatique, ledit dispositif étant utilisé dans le cas de roulage du pneumatique sous une pression de gonflage nulle ou de faible valeur. L'utilisation d'un tel dispositif, dit aussi de sécurité et monté à l'intérieur du pneumatique, doit permettre au véhicule, équipé et chargé, de continuer à rouler malgré la perte partielle ou totale de pression de gonflage, la continuité du roulage se révélant bénéfique pour différentes raisons connues.

Il a été proposé, dans la demande Européenne EP 0 635 384 A correspondant au préambule de la revendication 1, un dispositif de sécurité formé de deux matériaux et comprenant au moins un support rigide et une chape élastique en mélange caoutchouteux vulcanisé, ladite chape entourant le support rigide. Entre ledit support et ladite chape est disposé un lubrifiant permettant le déplacement circonférentiel de la chape sur le support, alors que la forme radialement extérieure de la couronne d'appui du support coopère avec les éléments de renforcement disposés dans la chape pour assurer le maintien radial et le guidage circonférentiel (maintien transversal) de la chape sur le support. Les éléments de renforcement sont composés d'au moins une tringle à laquelle on adjoint des armatures de renforcement comprenant au moins une nappe passant radialement sous ladite tringle.

Les dispositifs de sécurité performants étant souvent utilisés sur des véhicules possédant un système de gonflage "centralisé", c'est-à-dire un système permettant le gonflage et dégonflage du pneumatique en roulage, l'utilisation d'un lubrifiant solide ou pâteux, mais qui se disperse sous les effets de frottement et de la chaleur, provoque des dysfonctionnements dans le système de gonflage.

L'invention vise à perfectionner le dispositif ci-dessus et éviter au maximum la diffusion du lubrifiant. Pour cela, l'invention propose de modifier les profils méridiens de la face radialement supérieure de la couronne d'appui du support et de la face radialement intérieure de la chape respectivement, au niveau des rebords de couronne.

Le dispositif de soutien de la bande de roulement d'un pneumatique, conforme à l'invention et comprenant au moins un support rigide et une chape élastique en mélange caoutchouteux vulcanisé, un lubrifiant, disposé entre ledit support et ladite chape, permettant le déplacement circonférentiel entre le support et la chape, alors que la forme radialement extérieure de la couronne d'appui du support ayant deux rebords coopère avec les éléments de renforcement disposés dans la chape pour assurer le maintien radial et le guidage circonférentiel de ladite chape sur le support, est caractérisé en ce que chaque rebord de couronne est muni sur son bord d'au moins une rainure circonférentielle rectiligne dans laquelle vient se loger une nervure circonférentielle disposée sur la face radialement intérieure de la partie de la chape en caoutchouc correspondant au rebord de la couronne d'appui du support, ladite nervure étant en contact avec au moins le fond de la rainure correspondante du rebord, sans que ladite nervure soit comprimée sur le fond de ladite rainure.

Alors qu'il existe sur la largeur axiale commune entre la face radialement extérieure de la couronne d'appui métallique et la face radialement intérieure de la chape de caoutchouc un espace de faible dimension radiale, destiné à conférer au lubrifiant le maximum d'efficacité, chaque nervure de la chape étant en contact avec le fond de la rainure correspondante du rebord, le lubrifiant est bloqué en roulage normal, tout en permettant la rotation de la chape autour du support en roulage en mode dégradé (faible pression ou pression nulle), la lubrification étant suffisante au niveau des rainures et le serrage de la nervure sur la rainure étant nul.

Dans le cas d'un dispositif où d'une part la couronne d'appui du support comprend un fond de couronne et, axialement de part et d'autre, deux rebords de couronne, la face radialement extérieure dudit fond de couronne étant plus éloignée de l'axe de rotation du dispositif que les faces radialement extérieures des rebords, et où d'autre part la chape élastique comprend radialement à l'intérieur dans chacun de ses bords une tringle de renforcement disposée axialement en regard de la face extérieure du rebord de couronne, chaque nervure de la face radialement intérieure de la chape est avantageusement située axialement à l'extérieur de la projection sur ladite face de la largeur axiale maximale de la tringle de renforcement.

L'efficacité du système ci-dessus est grandement améliorée si l'espace entre la chape et la couronne d'appui reste le plus constant possible sur la largeur axiale, excepté la largeur correspondant aux rainures et nervures, quelles que soient les conditions de roulage, c'est-à-dire au repos, en roulage normal, et en roulage en mode dégradé. Afin de maintenir le profil méridien de la face radialement intérieure de la chape, il est avantageux que l'armature de renforcement, retournée autour des deux tringles situées dans les bords latéraux, soit formée de câbles préférentiellement en polyamide aromatique, et soit surmontée, dans sa partie centrale, d'une nappe de câbles, parallèles entre eux et faisant avec la direction circonférentielle un angle au plus égal à 10° et préférentiellement égal à ou très voisin de 0° (c'est-à-dire 0° ± 2,5°), lesdits câbles étant aussi en polyamide aromatique ou métalliques. Cette variante permet de mieux maintenir le profil méridien entre la fin de vulcanisation de la chape et sa mise en place sur le support, tout en assurant une meilleure répartition des efforts dus à la force centrifuge lors du roulage, par frettage de la partie centrale de ladite chape.

Il est de même avantageux, pour contrecarrer les effets de ladite force centrifuge, d'avoir une répartition des masses la plus homogène possible axialement. Une chape dépourvue sur sa face radialement extérieure de rainures, et l'utilisation de tringles plus légères, soit par la densité des matériaux qui les composent, soit par la diminution de leur surface transversale, permettent d'augmenter les masses au centre de la chape et de les diminuer aux bords.

Une diminution des masses sur les bords latéraux de la chape peut aussi être avantageusement obtenue par l'adoption d'un profil méridien latéral adapté, ledit profil étant caractérisé en ce qu'il comprend, vu en section transversale, un évidement concave entouré de part et d'autre de deux protubérances convexes.

Dans le cas d'un dispositif où la couronne d'appui du support présente en son centre une gorge correspondant à une nervure centrale et circonférentielle de la chape, nervure renforcée par une tringle unique, la répartition des masses sera optimisée par la présence sur la face radialement extérieure de la chape d'au moins une rainure centrale, le profil méridien latéral pouvant de même comporter un évidement concave, permettant alors d'assouplir la chape élastique et favoriser sa montabilité.

Les caractéristiques et avantages de l'invention seront mieux compris à l'aide de la description qui suit et qui se réfère au dessin illustrant à titre non limitatif des exemples d'exécution, sur lequel :
- la figure 1 représente schématiquement, vu en section méridienne, un dispositif conforme à l'invention,
- la figure 2 représente schématiquement, vue en section méridienne, une variante du dispositif tel que montré sur la figure 1 avec divers perfectionnements,
- la figure 3 représente schématiquement, vue en section méridienne, une variante du dispositif conforme à l'invention, dans lequel la couronne d'appui du support comprend une gorge.

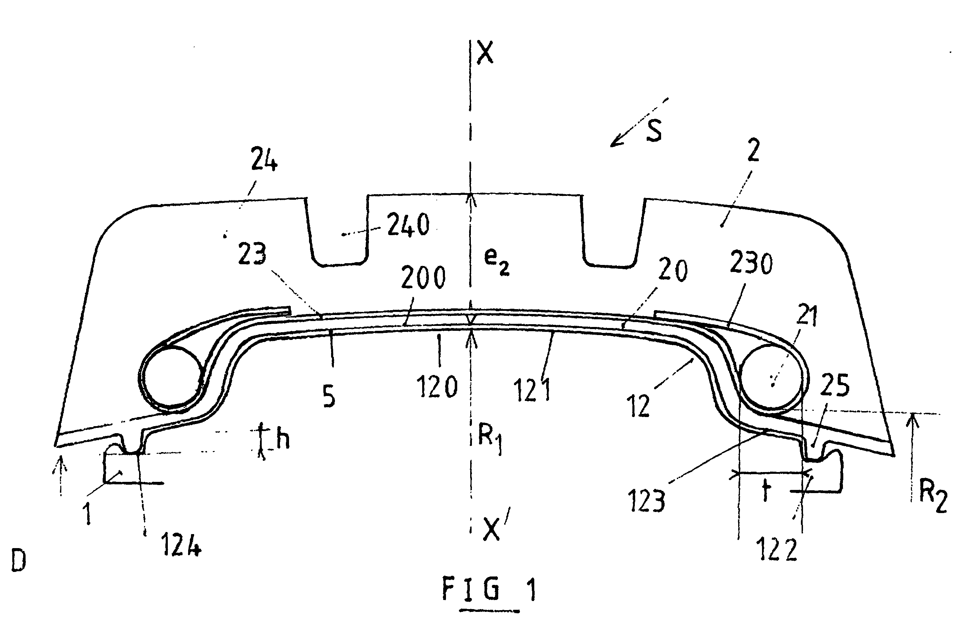

Le dispositif de sécurité S, montré sur la figure 1 et destiné à être monté à l'intérieur d'un pneumatique P, par exemple de dimension 14.00-20 X, est composé de trois parties : un support métallique rigide (1), une chape élastique non rigide (2) destinée à entrer en contact avec la face intérieure du sommet du pneumatique P, et une pièce annulaire (non montrée) de liaison avec une jante démontable usuelle, c'est-à-dire formée d'au moins trois pièces.

Le support rigide (1) est un support en alliage d'aluminium. Il est formé, vu en section méridienne, d'une base (non montrée) surmontée radialement d'un disque (non montré), lui-même surmonté de la couronne d'appui (12), destinée à recevoir sur sa face radialement extérieure la couche du lubrifiant (5) de la chape (2). Cette couronne d'appui (12) a une forme transversale semblable à la forme d'une jante, mais inversée, c'est-à-dire avec un fond de couronne (120) plus éloigné de l'axe de rotation du dispositif que les sommets des rebords de couronne (122). Le fond de couronne (120) a une face radialement extérieure (121) légèrement convexe, c'est-à-dire dont le centre de courbure est situé sur la trace XX' du plan équatorial du dispositif et radialement à l'intérieur. Quant aux rebords (122), ils sont pourvus chacun d'une rainure (124) circonférentielle et rectiligne, ladite rainure ayant une profondeur h égale à 0,15 fois e₂, mais pouvant être comprise entre 0,10 et 0,25 fois ladite épaisseur e₂ de la chape (2), alors que sa largeur mesurée au sommet de la rainure est égale à h, mais peut être comprise entre 0,4 h et 1,4 h. La rainure (124) possède deux parois présentant avec la face radialement extérieure (123) du rebord (122) de la couronne d'appui (12) des congés de raccordement circulaires, et sont réunies à un fond plat ou circulaire par deux congés circulaires. Les parties des faces radialement extérieures (123) des rebords (122), les plus proches du fond de couronne (120) sont pratiquement rectilignes et parallèles à l'axe de rotation. La distance, séparant le point de la face radialement extérieure (121) du fond (120) le plus éloigné de l'axe de rotation de la droite joignant les faces (123) des rebords (122), est égale à 22 mm, et généralement au moins égale à 0,25 fois l'épaisseur e₂ de la chape (2).

Radialement à l'extérieur du support rigide (1), sur la face extérieure de la couronne d'appui (12) recouverte d'une couche de lubrifiant (5) pâteux, est disposée la chape non rigide et élastique (2)

Ladite chape (2) est sous forme d'anneau circulaire fermé et a une face radialement intérieure (200) qui épouse géométriquement,-dans sa partie centrale, le profil méridien de la face radialement extérieure (121) de la couronne d'appui (12), en étant constamment distante de la face (121) d'une quantité égale à 1 mm, de manière à ménager un maximum d'efficacité du lubrifiant (5). Ladite face (200) est munie sur chacun de ses bords latéraux d'une nervure (25) circonférentielle, en regard de la rainure (124) de la couronne d'appui (12). Dimensionnellement, le diamètre D de sa génératrice, radialement la plus proche de l'axe de rotation, est le même que le diamètre D de la génératrice de la rainure (124) la plus proche de l'axe de rotation, ce qui signifie que le serrage de la nervure sur la rainure est nul et qu'il n'y a pas compression du caoutchouc de la nervure. Axialement, la largeur axiale de la nervure est inférieure à la largeur axiale h de la rainure du support, et ladite nervure est située axialement à l'extérieur de la projection t sur la face (200) du diamètre, dans la direction axiale, de la tringle tressée (21).

La chape (2) comprend, radialement à l'intérieur, une couche (20) de mélange vulcanisé présentant avec l'aluminium un coefficient de frottement faible tout en ayant une grande résistance mécanique, afin de pouvoir résister aux imperfections de surface de support (1), et aux corps étrangers pouvant éventuellement s'insérer entre ledit support (1) et la chape (2).

Symétriquement par rapport au plan équatorial XX' du dispositif, est disposée dans chaque bord inférieur de la chape (2) une tringle (21) dont le rayon intérieur R₂ est inférieur au rayon intérieur maximal R₁ de la couronne d'appui (12) du support (1). Les tringles (21), enrobées de mélange caoutchouteux, sont des tringles d'ancrage d'une armature de renforcement (23), composée d'une seule nappe de câbles métalliques en acier et retournée vers l'extérieur sur lesdites tringles (21) pour former des retournements (230).

Les tringles sont de type "tressé", de préférence sans âme centrale, ce qui permet une bonne résistance aux efforts de tension tout en permettant une ovalisation suffisante pour l'introduction aisée de la chape (2), ainsi renforcée, dans le pneumatique P.

Cette armature est surmontée radialement à l'extérieur d'une bande de roulement (24) de mélange caoutchouteux vulcanisé, ayant la particularité d'avoir des pertes hystérétiques faibles, afin de minimiser la génération d'échauffement. Cette bande de roulement (24) comprend des rainures circonférentielles (240), au nombre de deux dans l'exemple décrit.

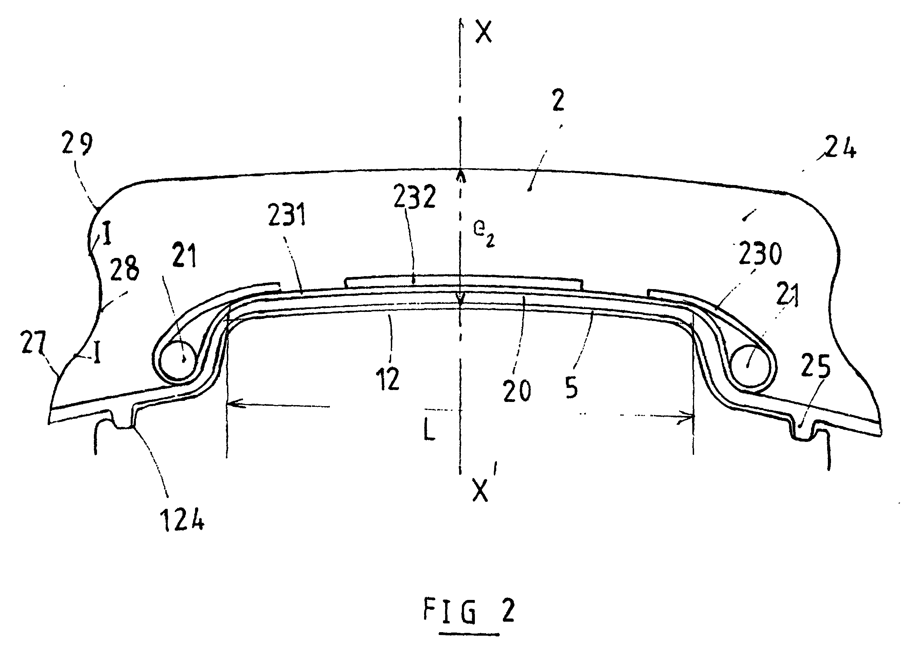

La variante du dispositif de sécurité S, montrée sur la figure 2, diffère de l'exemple montré sur la figure 1 par les caractéristiques suivantes :
a) les tringles (21) de renforcement ont, d'une part un diamètre de section transversale deux fois plus petit que le diamètre des tringles montrées sur la figure (1) et, d'autre part sont constituées de câbles en polyamide aromatique tout en restant de type "tressé",
b) l'armature de renforcement (23) est formée de deux nappes : une première nappe de câbles (231) en polyamide aromatique enroulée dans chaque bord de la chape (2) autour d'une tringle (21), ladite nappe étant surmontée dans sa partie centrale d'une nappe (232) d'éléments de renforcement circonférentiels, obtenue par enroulement d'un câble métallique en acier, jusqu'à obtention de la largeur désirée de ladite nappe (232), ladite largeur étant égale à 0,5 fois la largeur L de la partie centrale de la couronne d'appui (12),
c) le profil méridien latéral de la chape (2) n'est pas rectiligne, mais est formé radialement de l'intérieur à l'extérieur de l'arc de cercle (27) d'une première protubérance convexe, suivi de l'arc de cercle (28) d'un évidement concave, le rayon dudit arc de cercle (28) étant sensiblement égal au rayon de convexité de la première protubérance (27), ledit évidement (28) étant lui-même prolongé par l'arc de cercle (29) d'une deuxième protubérance convexe, assurant la liaison avec la face radialement supérieure de la chape (2), ledit arc de cercle (29) ayant un rayon de courbure tel que la distance radiale, entre les points d'inflexion I des trois arcs de cercle, soit sensiblement égale à au moins à 0,7 fois l'épaisseur e₂ de la chape (2). Il est évident que les arcs de cercle définis ci-dessus peuvent être remplacés par des segments de conique, que ce soit parabole, hyperbole, ellipse ... etc ....

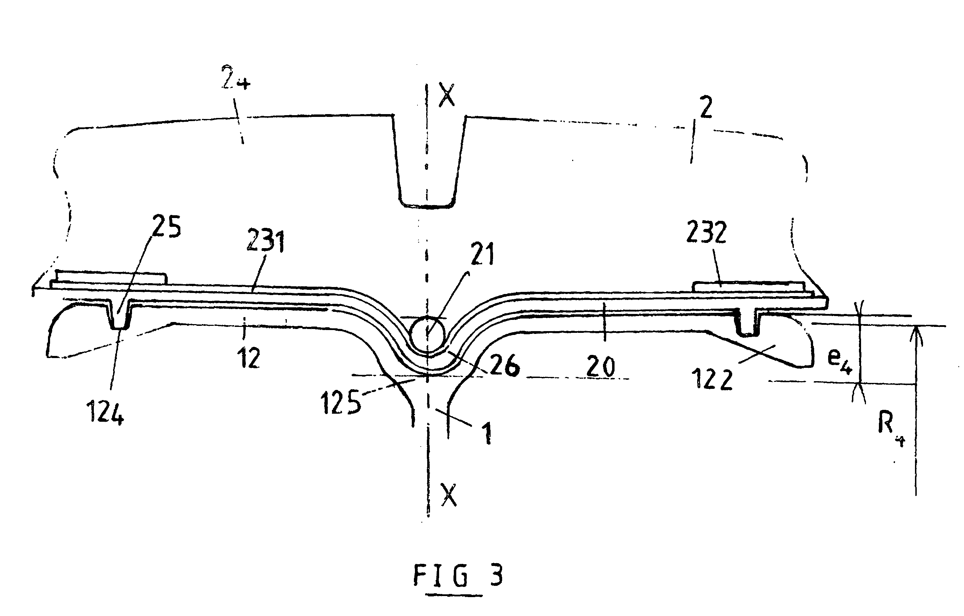

Le profil méridien latéral et non rectiligne de chaque côté de la chape (2) est aussi le profil de la chape (2) du dispositif montré sur la figure 3, chape (2) surmontant radialement un support métallique rigide (1). La couronne d'appui (12) du support (1) présente en son centre une gorge (125) comprise axialement entre les deux rebords (122) de la couronne d'appui (12). Cette gorge (125) est destinée à recevoir la nervure (26), centrale et circulaire, de la chape élastique (2), nervure qui est renforcée par une tringle unique (21) de mêmes type et structure que les tringles (21) utilisées dans le dispositif représenté sur la figure 2. La gorge (125) a une profondeur, mesurée dans le plan équatorial XX', entre son point le plus rapproché de l'axe de rotation et la droite fictive joignant les points des rebords (122) les plus éloignés de l'axe de rotation, telle que le rayon extérieur R₄ de la tringle (21) de renforcement de la nervure soit inférieur au rayon de la droite fictive ci-dessus, ladite profondeur e₄ étant au moins égale à 0,25 fois l'épaisseur e₂ de la chape (2). Ladite chape (2) comprend dans sa partie radialement inférieure une couche de mélange vulcanisé (20), identique à celles des chapes des figures 1 et 2, une armature de renforcement (23) composée d'une nappe (231) de câbles en polyamide aromatique, ayant une largeur sensiblement égale à la largeur de la couronne d'appui du support et passant radialement sous la tringle (21) de renforcement, et, situées de part et d'autre du plan équatorial XX', de deux nappes étroites (232) formées, chacune de câbles métalliques en acier faisant avec la direction circonférentielle un angle compris entre 0° et 5°, la largeur axiale de chacune de ces nappes (232) étant égale à 0,25 fois la largeur axiale de la nappe (231). Une bande de roulement (24), munie d'une seule rainure circonférentielle, centrée sur le plan équatorial XX', complète la chape (2), permettant ainsi en combinaison avec la présence des deux nappes étroites d'obtenir la répartition des masses la plus homogène possible. Conformément à l'invention, est disposée sur chaque rebord (122) de la couronne d'appui (12) une rainure (124) destinée à recevoir une nervure circonférentielle (25), rainure et nervure étant telles que décrites précédemment.

## Revendications

1. Dispositif de soutien S de la bande de roulement d'un pneumatique P, comprenant au moins un support rigide (1) et une chape élastique (2) en mélange caoutchouteux vulcanisé, un lubrifiant (5), disposé entre ledit support (1) et ladite chape (2), permettant le déplacement circonférentiel entre le support (1) et la chape (2), alors que la forme radialement extérieure de la couronne d'appui (12) du support (1) ayant deux rebords (122) coopère avec les éléments de renforcement (21,23) disposés dans la chape (2) pour assurer le maintien radial et le guidage circonférentiel de ladite chape (2) sur le support(1), **caractérisé en ce que** chaque rebord (122) de couronne d'appui (12) est muni sur son bord d'au moins une rainure circonférentielle rectiligne (124) dans laquelle vient se loger une nervure circonférentielle (25) disposée sur la face radialement intérieure (200) de la partie de la chape en caoutchouc (2) correspondant au rebord (122) de la couronne d'appui (12) du support (1), ladite nervure (25) étant en contact avec au moins le fond de la rainure correspondante (124) du rebord (122), sans que ladite nervure (25) soit comprimée sur le fond de ladite rainure (124).

2. Dispositif selon la revendication 1, **caractérisé en ce que** la couronne d'appui (12) du support (1) comprend un fond de couronne (120) et, axialement de part et d'autre, deux rebords de couronne (122), la face radialement extérieure (121) dudit fond de couronne (120) étant plus éloignée de l'axe de rotation du dispositif que les faces radialement extérieures (123) des rebords (122), et **en ce que** la chape élastique (2) comprend radialement à l'intérieur dans chacun de ses bords une tringle de renforcement (21) disposée axialement en regard de la face extérieure (123) du rebord de couronne (122), chaque nervure (25) de la face radialement intérieure de la chape (2) étant située axialement à l'extérieur de la projection t sur ladite face de la largeur axiale maximale de la tringle de renforcement (21).

3. Dispositif selon la revendication 2, dont la chape (2) est renforcée par une armature de renforcement (23), **caractérisé en ce que** l'armature de renforcement (23) est composée d'une nappe (231) de câbles en polyamide aromatique , retournée autour des tringles (21) situées dans les bords latéraux, ladite nappe (231) étant surmontée, dans sa partie centrale, d'une nappe (232) de câbles en polyamide aromatique , parallèles entre eux et faisant avec la direction circonférentielle un angle au plus égal à 10°, et préférentiellement très voisin de 0°.

4. Dispositif selon l'une des revendications 1 à 3, **caractérisé en ce que** la chape (2) est renforcée par une(des) tringle(s) (21) en câbles de polyamide aromatique.

5. Dispositif selon l'une des revendications 1 à 4, **caractérisé en ce que** le profil méridien latéral de la chape (2) est composée d'un évidement concave (28), prolongé radialement à l'intérieur et à l'extérieur par des protubérances convexes (27,29).

## Patentansprüche

1. Reibungskupplung, umfassend eine Gegenanpreßplatte, die zur drehfesten Anbringung an einer treibenden Welle bestimmt ist, eine Kupplungsscheibe (100), die an ihrem äußeren Umfang wenigstens einen Reibbelag (101) trägt und die zur drehfesten Anbringung an einer getriebenen Welle bestimmt ist, eine Druckplatte (11), einen an der Gegenanpreßplatte befestigten Deckel (12) und axial wirksame Einrückmittel (13), die durch Ausrückmittel betätigt werden und die zwischen dem Deckel (12) einerseits und der Druckplatte (11) andererseits über Sekundär- (17) und Primärauflagemittel (18) wirken, wobei die Druckplatte (11) drehfest mit dem Deckel (12) verbunden ist, während sie sich axial im Verhältnis zu diesem verschieben kann, und der Wirkung von elastischen Rückstellmitteln ausgesetzt ist, die die Druckplatte (11) axial zum Deckel (12) hin zurückstellen, wobei die Kupplung außerdem eine Verschleißnachstellvorrichtung aufweist, umfassend Rampenmittel (14), deren Rampen (16) in Umfangsrichtung und axial zwischen den Auflagemitteln (17) und der Druckplatte (11) zur Zusammenwirkung mit Gegenrampenmitteln (15) angeordnet sind, und eine Zahnung (19), mit der eine tangential angeordnete Schnecke (23) zusammenwirkt, wobei die Rampenmittel (14) drehfest mit der besagten Zahnung (19) verbunden sind, wobei Drehantriebsmittel (20) für die Schnecke (23) vorgesehen sind, die durch den Verschleiß des bzw. der Reibbeläge (101) bei eingerückter Kupplung betriebsbereit werden, die ein drehfest mit der Schnecke (23) verbundenes Sperrzahnrad enthalten und über eine Betätigungszunge (36) betätigt werden, die ein elastisches Organ (32) aufweist, wobei die Schnecke (23) und das Sperrzahnrad (20) an einem Träger (22) gelagert sind, wobei der Träger (22) und das elastische Organ (32) fest mit dem Deckel (12) verbunden und in dessen Innern angeordnet sind, und wobei der Träger (22) eine U-Form mit einem Steg (24) und zwei Schenkeln (25) zur Lagerung einer die Schnecke (23) und das Sperrzahnrad (20) tragende Achse (27) aufweist,
**dadurch gekennzeichnet, daß** das elastische Organ (32) unabhängig von der Befestigung des Trägers am Deckel am Steg (24) des Trägers (22) befestigt (55) ist.

2. Reibungskupplung nach Anspruch 1, **dadurch gekennzeichnet, daß** das elastische Organ (32), wenigstens teilweise, in dem Bereich angeordnet ist, in dem es am Träger (22) zwischen dem Steg (24) des Trägers (22) und dem Deckel (12) befestigt ist.

3. Reibungskupplung nach Anspruch 2, **dadurch gekennzeichnet, daß** das elastische Organ (32) im Axialschnitt eine allgemeine U-Form aufweist und zwei axial ausgerichtete Schenkel (35, 36) umfaßt, von denen einer (35) mit einem Loch (51) für seine Befestigung am Träger (22), beispielsweise durch Aufnieten oder Aufklippsen, versehen ist, während der andere (36) als Betätigungszunge gestaltet ist, wobei er sich im wesentlichen parallel zur Achse der Kupplung erstreckt.

4. Reibungskupplung nach Anspruch 3, **dadurch gekennzeichnet, daß** sich der Steg (24) des Trägers (22) über die Schenkel (25) hinaus verlängert, wobei er einen querverlaufenden Rücksprung (30) aufweist, der sich insgesamt senkrecht im Verhältnis zum Steg (24) und zu den Schenkeln (25) erstreckt, und daß sich der Schenkel (35) des elastischen Organs (32) zur Befestigung am Träger (22) entsprechend einer zur Außenseite des U gerichteten, insgesamt senkrechten Zunge (52) verlängert, die ebenso wie der Rücksprung (30) des Trägers (22) an einer Querrandleiste (21) des Deckels (12) befestigt ist.

5. Reibungskupplung nach Anspruch 2, **dadurch gekennzeichnet, daß** der auf das Sperrzahnrad (20) bezogene Verstellweg der Betätigungszunge (36) beim Ausrückvorgang durch einen Kontrollanschlag (33) begrenzt wird, der aus wenigstens einem aus dem Träger (22) ausgeschnittenen Ansatz besteht.

## Claims

1. A friction clutch comprising a reaction plate adapted to be mounted in rotation on a driving shaft, a friction disc (100) carrying at its outer periphery at least one friction liner (101) and adapted to be mounted in rotation on a driven shaft, a pressure plate (11), a cover plate (12) fixed on the reaction plate, axially acting clutch-engaging means (13) which are controlled by declutching means and which work between the cover plate (12) on the one hand and the pressure plate (11) on the other hand, through secondary abutment means (17) and primary abutment means (18), the pressure plate (11) being fixed in rotation to the cover plate (12) while being displaceable axially with respect to the latter and being subjected to the action of resilient return means which urge the pressure plate (11) axially towards the cover plate (12), the said clutch further including a wear compensating device comprising ramp means (14), the ramps (16) of which are disposed circumferentially and which is placed axially between the abutment means (17) and the pressure plate (11) and adapted to cooperate with counter-ramp means (15), a set of teeth (19) with which a worm (23), disposed tangentially, is in cooperation, the ramp means (14) being fixed in rotation to the said set of teeth (19), means (20) being provided for driving the worm (23) in rotation and being operated in response to wear in the friction liner or liners (101) when the clutch is engaged, the said worm driving means consisting of a ratchet wheel which is fixed in rotation to the worm (23) and controlled through a control tongue (36) which is part of a resilient member (32), the worm (23) and the ratchet wheel (20) being carried by a support member (22), the support member (22) and the resilient member (32) being fixed to the cover plate (12) and being placed inside the latter, the support member (22) being U-shaped with a spine (24) carrying the worm (23) and the ratchet wheel (20), **characterised by** the fact that the resilient member (32) is fixed (55) to the spine (24) of the support member (22) independently of the fastening of the support member to the cover plate.

2. A friction clutch according to Claim 1, **characterised by** the fact that the resilient member (32) is disposed at least partly in the zone in which it is fixed to the support member (22), between the spine (24) of the support member (22) and the cover plate (12).

3. A friction clutch according to Claim 2, **characterised by** the fact that the resilient member (32) is generally U-shaped in axial cross section and comprises two axially oriented wings (35, 36), one of which (35) is formed with a hole (51) for fastening it to the support member (22), for example by riveting or clipping, the other one (36) being configured as a control tongue and extending generally parallel to the axis of the clutch.

4. A friction clutch according to Claim 3, **characterised by** the fact that the spine (24) of the support member (22) is extended, beyond the wings (25), by a transverse flange (30) extending generally at right angles to the spine (24) and wings (25), while the wing (35) of the resilient member (32), fastening the latter to the support member (22), is extended by a generally perpendicular tongue (52) which extends outwards from the fixed U, and, with the flange (30) of the support member (22), lies against a transverse flange (21) of the cover plate (12).

5. A friction clutch according to Claim 2, **characterised by** the fact that the course of travel of the control tongue (36) with respect to the ratchet wheel (20), during the operation of disengaging the clutch, is limited by a control abutment (33) defined by at least one lug formed by being pressed out in the support member (22).
